# EUROPEAN PATENT APPLICATION

(11) **EP 4 786 225 A1**
(43) Date of publication of application: **05.08.2026**
(21) Application number: 24870651.7
(22) Date of filing: 23.09.2024
(51) Int. Cl.: B60H 1/22

(54) **AIR CONDITIONING MODULE AND VEHICLE**

(30) Priority: 28.09.2023 CN 202322673366 U
(71) Applicant: Valeo Electrification, 95892 Cergy Pontoise (FR)
(72) Inventor: LIU, Tingwei, Hubei 434000 (CN); BAO, Tao, Hubei 434000 (CN)
(74) Representative: Valeo Powertrain Systems
(86) International application number: PCT/CN2024/120376
(87) International publication number: WO 2025/067107

(57) **Abstract**

An air conditioning module (10) for a vehicle, comprising: a housing (100), configured to allow airflow to pass through; and an electric heater (200), arranged in the housing (100), the electric heater (200) being provided with a first heating portion (210) allowing airflow to pass through. The housing (100) comprises a first partition wall (110), and the first partition wall (110) extends from the first heating portion (210) toward a downstream direction of the airflow, so as to form a first airflow channel (2001) and a second airflow channel (2002) downstream of the first heating portion (210), wherein a first bypass hole (111) is formed in the first partition wall (110). Moreover, the air conditioning module (10) further comprises a first bypass valve (300a) arranged on the housing (100). When one of the first airflow channel (2001) and the second airflow channel (2002) is closed, the first bypass valve (300a) opens the first bypass hole (111), such that the first airflow channel (2001) is communicated with the second airflow channel (2002) by means of the first bypass hole (111), thereby avoiding damaging the electric heater (200) or the air conditioning module (10). Also disclosed is a vehicle, comprising the air conditioning module (10).

## Description

### Technical Field

The present disclosure relates to the field of air conditioning, more specifically to an air conditioning module, which may be an air conditioning module for a vehicle, for example. The present disclosure further relates to a vehicle comprising such an air conditioning module.

### Background Art

When an air conditioning module is used for regulating gas in a zoned space, more specifically the temperature and/or flow rate of the gas, the zoned space, for example, is a vehicle cabin comprising zones such as a driver zone, a front passenger zone, and a rear-seat zone or rear driver-side and rear passenger-side zones; it is generally desired that each zone can be independently regulated by an air conditioning module according to actual requirements. It is known that air conditioning modules generally comprise a heater, such as an electric heater, for heating gas flowing therethrough. When it is necessary to use an air conditioning module to independently regulate each zone of a space equipped with this air conditioning module, it is also desirable to correspondingly divide the electric heater of the air conditioning module into heating parts corresponding to each zone; however, this is difficult to achieve in terms of design, process and integration with the air conditioner module. In this type of situation, a compromising method divides the electric heater into heating parts that are fewer in number than the zones of the space, such that one heating part may be used for two or more zones of the space that are regulated independently of each other, thereby satisfying design, process and integration constraints. However, this further introduces a new problem, namely that the same heating part of the electric heater may be used for two or more zones of the space that are regulated independently of each other, and when the first zone of these two or more zones of the space does not require the use of heated air, but the second zone does require the use of heated air, a first airflow channel corresponding to this first zone is closed, at which time no airflow is able to flow through a portion of the heating part of the electric heater that corresponds to this first airflow channel, such that this portion will experience dry burning, which easily damages the electric heater or air conditioning module, and presents a safety hazard.

A new air conditioning module is needed, capable of solving the problems of the prior art while bringing other advantages.

### Summary of the Utility Model

For this reason, an air conditioning module for a vehicle is proposed according to an invention of the present disclosure, the air conditioning module comprising:
a housing, which is constructed to allow an airflow to pass through;
an electric heater, which is arranged in the housing; the electric heater has a first heating part that allows the airflow to pass through,
wherein the housing has a first partition wall, and the first partition wall extends from the first heating part toward downstream of the flow of the airflow, so as to partition a first airflow channel and a second airflow channel downstream of the first heating part,
wherein a first bypass hole is provided in the first partition wall, and
wherein the air conditioning module further comprises a first bypass valve that is arranged on the housing;
when one of the first airflow channel and the second airflow channel is closed, the first bypass valve opens the first bypass hole, so that the first airflow channel communicates with the second airflow channel by means of the first bypass hole.

According to various embodiments of the present disclosure, the air conditioning module proposed by the present disclosure may further comprise one or more of the following further developed features.

In some embodiments, the electric heater further has a second heating part that allows the airflow to pass through; the housing further has a second partition wall, and the second partition wall extends from the second heating part toward downstream of the flow of the airflow, so as to partition a third airflow channel and a fourth airflow channel downstream of the second heating part, wherein a second bypass hole is provided in the second partition wall, and wherein the air conditioning module further comprises a second bypass valve that is arranged on the housing; when one of the third airflow channel and the fourth airflow channel is closed, the second bypass valve opens the second bypass hole, so that the third airflow channel communicates with the fourth airflow channel by means of the second bypass hole.

In some embodiments, the housing further has a main partition wall; the main partition wall partitions the first heating part and the second heating part; and the main partition wall partitions the second airflow channel and the third airflow channel.

In some embodiments, the first bypass valve and/or the second bypass valve is correspondingly configured as a first flap valve and/or a second valve flap that is able to rotate on the housing.

In some embodiments, the first partition wall has a first arcuate protruding piece that protrudes relative to the first partition wall and surrounds at least a portion of the first bypass hole, and a first radial outer edge of the first flap valve is configured to complement the shape of the first arcuate protruding piece, wherein at least at a closed position in which the first valve flap closes the first bypass hole, the first radial outer edge of the first flap valve abuts the first arcuate protruding piece; and/or the second partition wall has a second arcuate protruding piece that protrudes relative to the second partition wall and surrounds at least a portion of the second bypass hole, and a second radial outer edge of the second flap valve is configured to complement the shape of the second arcuate protruding piece, wherein at least at a closed position in which the second valve flap closes the second bypass hole, the second radial outer edge of the second flap valve abuts the second arcuate protruding piece.

In some embodiments, a first sealing member is provided at the first radial outer edge of the first flap valve, and/or a second sealing member is provided at the second radial outer edge of the second valve flap.

In some embodiments, the first bypass valve and/or the second bypass valve is correspondingly configured as a portion of the first defrosting priority valve and/or the second defrosting priority valve.

In some embodiments, the first defrosting priority valve and/or the second defrosting priority valve is correspondingly a first cylindrical valve and/or a second cylindrical valve.

In some embodiments, the first bypass valve and/or the second bypass valve is correspondingly an axial end face of the first cylindrical valve and/or the second cylindrical valve that is perpendicular to a rotation axis of the first cylindrical valve and/or the second cylindrical valve.

In some embodiments, the air conditioning module further comprises the following arranged on the housing: a first channel valve, which is configured to open or close the first airflow channel; a second channel valve, which is configured to open or close the second airflow channel; and/or a third channel valve, which is configured to open or close the third airflow channel; and a fourth channel valve, which is configured to open or close the fourth airflow channel.

In some embodiments, the electric heater comprises a positive temperature coefficient heating element.

Another aspect of the present disclosure proposes a vehicle, comprising the air conditioning module according to any one of the above embodiments.

### Brief Description of the Drawings

In order to explain the technical solution of embodiments of the present disclosure more clearly, the drawings that need to be used in the embodiments are briefly described below. It should be understood that the drawings below show only some embodiments of the present disclosure, so should not be regarded as limiting the scope. Those skilled in the art could obtain other related drawings based on these drawings without inventive effort. In the drawings:
Fig. 1 shows a three-dimensional schematic drawing of an air conditioning module according to an exemplary embodiment;
Fig. 2 shows a planar schematic drawing of an air conditioning module according to an exemplary embodiment, wherein the air conditioning module is an air conditioning module of three zones comprising a first zone, a second zone and a third zone;
Fig. 3 shows a planar schematic drawing of an air conditioning module according to another exemplary embodiment, wherein the air conditioning module is an air conditioning module of four zones comprising a first zone, a second zone, a third zone and a fourth zone;
Fig. 4 shows a three-dimensional schematic drawing of an electric heater of an air conditioning module according to an exemplary embodiment;
Fig. 5 is a partial three-dimensional schematic drawing of an air conditioning module according to an exemplary embodiment, wherein a portion of a housing is removed to show an interior construction;
Fig. 6 is a partial three-dimensional schematic drawing of an air conditioning module according to an exemplary embodiment shown from another angle, wherein a portion of a housing is removed to show an interior construction;
Fig. 7 shows a partial three-dimensional schematic drawing of an air conditioning module according to an exemplary embodiment, wherein a portion of a housing is removed to show an interior construction, and an arrow is used to schematically show a flow direction of an airflow when a first bypass valve at least partially opens a first bypass hole;
Fig. 8 shows a highly schematic drawing of an air conditioning module according to an exemplary embodiment, wherein a first airflow channel is closed and a second airflow channel is open, and a first bypass valve is in a second position which at least partially opens a first bypass hole;
Fig. 9 shows a highly schematic drawing of an air conditioning module according to an exemplary embodiment, wherein a first airflow channel is closed and a second airflow channel is open, and a first bypass valve is in a second position which at least partially opens a first bypass hole;
Fig. 10 shows a highly schematic drawing of the air conditioning module according to the exemplary embodiment shown in Fig. 9, wherein the second airflow channel is closed and the first airflow channel is open, and the first bypass valve is in the second position which at least partially opens the first bypass hole;
Fig. 11 shows a highly schematic drawing of the air conditioning module according to the exemplary embodiment shown in Fig. 9, wherein the first airflow channel and the second airflow channel are both open, and the first bypass valve is in a first position which closes the first bypass hole;
Fig. 12 shows a highly schematic drawing of the air conditioning module according to the exemplary embodiment shown in Fig. 9, wherein the first airflow channel and the second airflow channel are both closed, and the first bypass valve may be in the first position which closes the first bypass hole and in the second position which at least partially opens the first bypass hole;
Fig. 13 shows a sectional view of an air conditioning module according to an exemplary embodiment, wherein a second bypass valve is in a first position which closes a second bypass hole;
Fig. 14 shows a sectional view of an air conditioning module according to an exemplary embodiment, wherein a second bypass valve is in a second position which at least partially opens a second bypass hole;
Fig. 15 shows a highly schematic drawing of an air conditioning module according to an exemplary embodiment, wherein a third airflow channel is closed and a fourth airflow channel is open, and a second bypass valve is in a second position which at least partially opens a second bypass hole;
Fig. 16 shows a highly schematic drawing of the air conditioning module according to the exemplary embodiment shown in Fig. 15, wherein the fourth airflow channel is closed and the third airflow channel is open, and the second bypass valve is in the second position which at least partially opens the second bypass hole;
Fig. 17 shows a highly schematic drawing of the air conditioning module according to the exemplary embodiment shown in Fig. 15, wherein the third airflow channel and the fourth airflow channel are both open, and the second bypass valve is in a first position which closes the second bypass hole;
Fig. 18 shows a highly schematic drawing of the air conditioning module according to the exemplary embodiment shown in Fig. 9, wherein a third airflow channel and a fourth airflow channel are both closed, and a second bypass valve may be in a first position which closes a second bypass hole and in a second position which at least partially opens the second bypass hole;
Fig. 19 shows a sectional view of an air conditioning module according to an exemplary embodiment, wherein a second defrosting priority valve is in a defrosting priority position;
Fig. 20 shows a first arcuate protruding piece and a first bypass hole arranged in a first partition wall of an air conditioning module according to an exemplary embodiment in a partial detailed three-dimensional schematic drawing;
Fig. 21 shows a three-dimensional schematic drawing of a first defrosting priority valve comprising a first bypass valve;
Fig. 22 shows a first defrosting priority valve comprising a first bypass valve in a first position which closes a first bypass hole, in an air conditioning module according to an exemplary embodiment shown in a partial detailed three-dimensional schematic drawing;
Fig. 23 shows a second arcuate protruding piece and a second bypass hole arranged in a second partition wall of an air conditioning module according to an exemplary embodiment in a partial detailed drawing;
Fig. 24 shows a second defrosting priority valve comprising a second bypass valve of an air conditioning module according to an exemplary embodiment in a three-dimensional schematic drawing;
Fig. 25 shows a corresponding relationship between a second partition wall and a second defrosting priority valve comprising a second bypass valve when in a first position in a partial three-dimensional detailed schematic drawing; and
Fig. 26 shows a corresponding relationship between a second partition wall and a second defrosting priority valve comprising a second bypass valve when in a second position in a partial three-dimensional detailed schematic drawing.

### List of reference numerals

10 air conditioning module
100 housing
110 first partition wall
111 first bypass hole
112 first arcuate protruding piece
120 second partition wall
121 second bypass hole
122 second arcuate protruding piece
130 main partition wall
131 first partition portion
132 second partition portion
140a, 140b upstream main partition wall
150 first upstream partition wall
160 second upstream partition wall
170 first support shaft
180 second support shaft
1001 first channel valve
1002 second channel valve
1003 third channel valve
1004 fourth channel valve
1005 right-front face-blowing outlet
1006 right-front feet-blowing outlet
1007 left-front face-blowing outlet
1008 left-front feet-blowing outlet
1009 right-rear face-blowing/feet-blowing outlet
1010 left-rear face-blowing/feet-blowing outlet
1011 defrosting outlet
1110 first type of mixing flap
1120 second type of mixing flap
1101 first mixing flap
1102 second mixing flap
1103 third mixing flap
1104 fourth mixing flap
200 electric heater
210 first heating part
220 second heating part
290 heating core
2001 first airflow channel
2002 second airflow channel
2003 third airflow channel
2004 fourth airflow channel
2110 first overall upstream airflow channel
2120 second overall upstream airflow channel
2101 first upstream airflow channel
2102 second upstream airflow channel
2103 third upstream airflow channel
2104 fourth upstream airflow channel
300a first bypass valve
300b second bypass valve
320a first radial outer edge
321a first sealing member
320b second radial outer edge
321b second sealing member
400a first defrosting priority valve
401a first rotary shaft
410a, 420a first frame part
411a, 421a first axial end beam of first frame part
412a, 422a second axial end beam of first frame part
413a, 423a top beam of first frame part
430a first extension part
400b second defrosting priority valve
401b second rotary shaft
410b, 420b second frame part
411b, 421b first axial end beam of second frame part
412b, 422b second axial end beam of second frame part
413b, 423b top beam of second frame part
430b second extension part
500 evaporator
Z1a, Z1b first zone
Z2a, Z2b second zone
Z3a, Z3b third zone
Z4b fourth zone

### Detailed Description of Embodiments

An air conditioning module according to embodiments of the present disclosure is described in detail below with reference to the drawings. In order to make the objectives, technical solutions and advantages of the present practical disclosure clearer, the technical solutions in embodiments of the present disclosure will be clearly and completely described below in conjunction with the drawings in the embodiments of the present disclosure; obviously, the embodiments described are some, not all, of the embodiments of the present disclosure.

Thus, the detailed description below of embodiments of the present disclosure provided in conjunction with the drawings is not intended to limit the claimed scope of the present disclosure, and merely shows selected embodiments of the present disclosure. All other embodiments obtained by those skilled in the art on the basis of the embodiments in the present disclosure without inventive effort are included in the scope of protection of the present disclosure.

Unless otherwise defined in the context, the singular includes the plural. Throughout this specification, the terms "comprising", "having", etc. are used herein to specify the existence of the mentioned characteristic, number, step, operation, element, component or combination thereof, without ruling out the existence or addition of one or more other characteristics, numbers, steps, operations, elements, components or combinations thereof.

In addition, although terms including ordinal numbers such as "first", "second", etc. may be used to describe various components, these components are not limited by these terms, which are merely used to differentiate one element from another. For example, without departing from the scope of the present disclosure, a first component may be referred to as a second component and, similarly, a second component may be referred to as a first component.

It should be understood that, in the description of the present utility model, a directional or positional relationship indicated by a term like "upper", "lower", "left", "right", "inner", "outer", etc. is based on a directional or positional relationship shown in the drawings, or is a directional or positional relationship in which the disclosed product is usually placed when used, or is a directional or positional relationship usually understood by those skilled in the art; it is intended only for convenience of description of the present disclosure and brevity of description, instead of indicating or implying that the device or element in question must have a specific direction or be structured or operated in a specific direction, and therefore should not be construed as limiting the present disclosure.

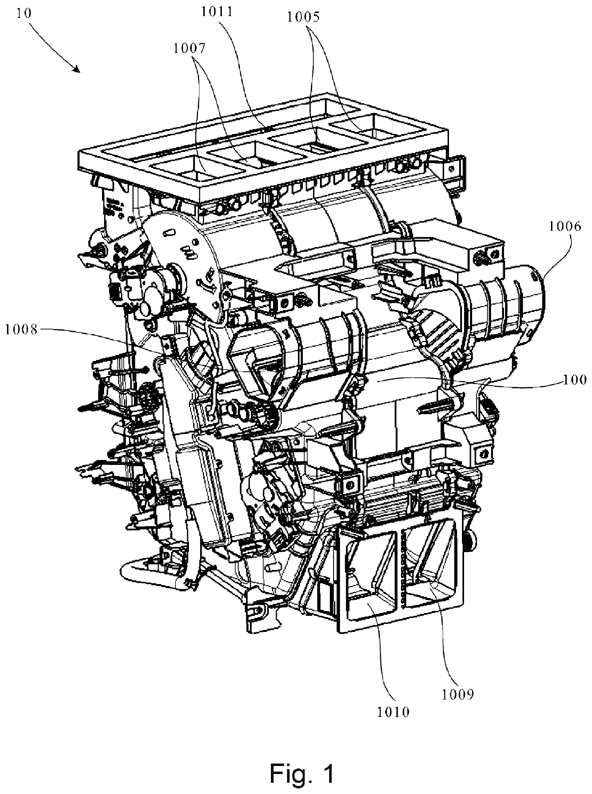

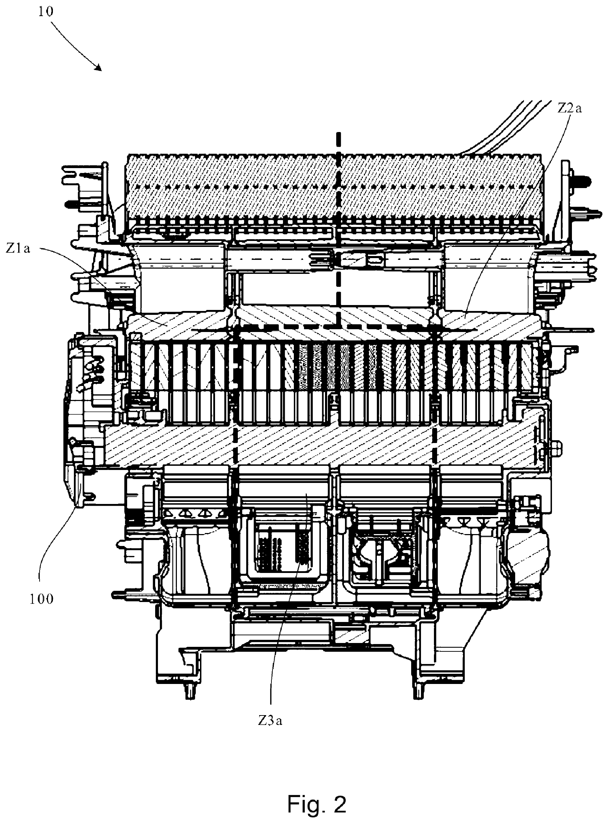

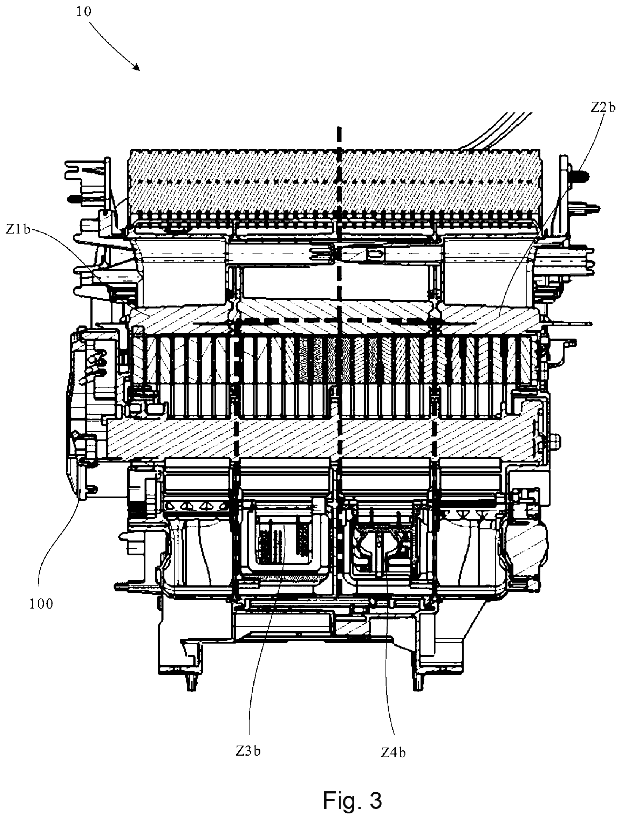

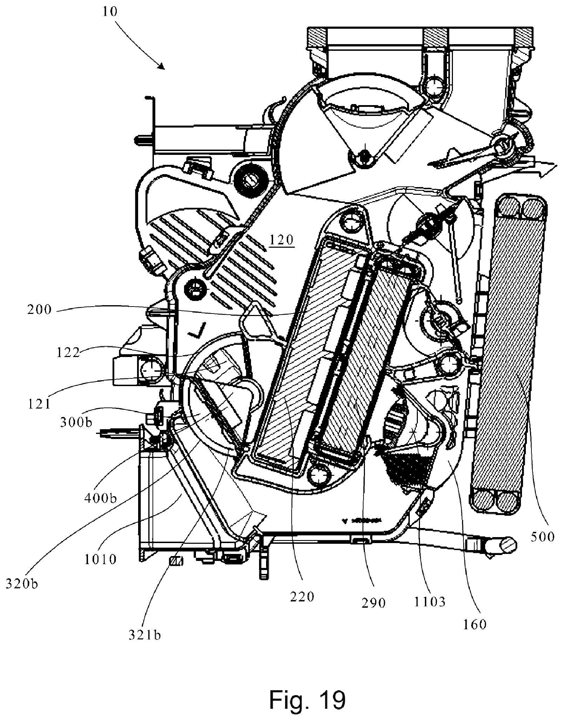

Referring to Figs. 1 - 3, 5 - 7, 13 - 14 and 19, the present utility model proposes an air conditioning module 10, which is an air conditioning module 10 used for a vehicle for example, used for regulating gas that enters the cabin of the vehicle, and the vehicle, for example, is a motor vehicle, an electric vehicle or a hybrid electric vehicle, etc. According to an embodiment, the air conditioning module 10 may comprise a housing 100 and a heater arranged inside the housing 100. The housing 100 is constructed to allow an airflow to pass through. In a specific embodiment, the housing 100 may comprise one or more air inlets and multiple air outlets, the air inlet being configured to allow an airflow entering the housing 100 to be regulated by the air conditioning module 10, for example being heated or cooled, and the air outlet being configured to discharge the regulated airflow from the housing 100, for example into a corresponding zone inside a vehicle cabin. The heater is configured to heat an airflow flowing therethrough during operation, and may comprise an electric heater 200. More specifically, the electric heater 200 may comprise a positive temperature coefficient (PTC) heating element. Optionally, the heater may further comprise another heater, such as a heating core 290 that uses a heat transfer fluid to heat an airflow. In an embodiment, as shown in Fig. 2, an air conditioning module 10 is an air conditioning module of three zones, and may comprise three zones that are independently regulated and controlled, i.e. a first zone Z1a, a second zone Z2a and a third zone Z3a. In another embodiment, as shown in Fig. 3, an air conditioning module 10 is an air conditioning module of four zones, and may comprise four zones that are independently regulated and controlled, i.e. a first zone Z1b, a second zone Z2b, a third zone Z3b and a fourth zone Z4b.

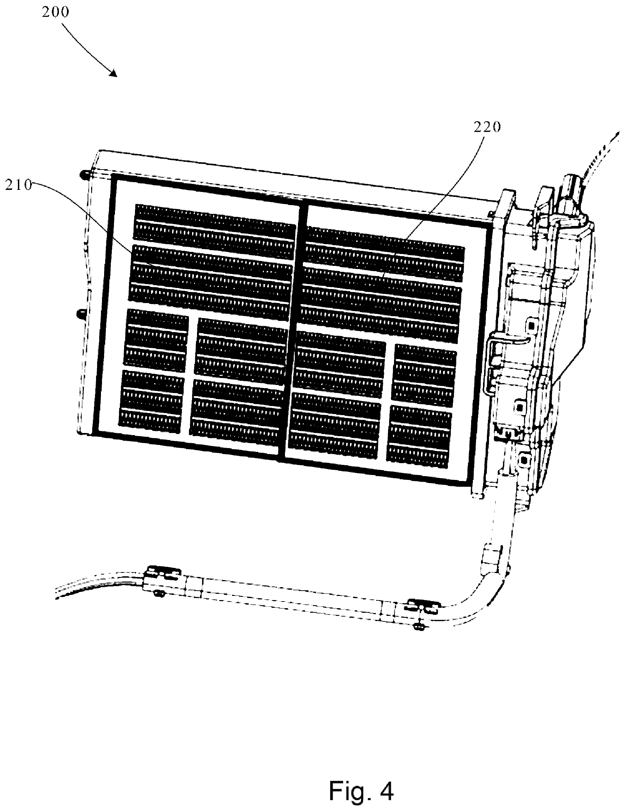

As shown in Figs. 4 - 12 and 15 - 18, according to some embodiments, an electric heater 200 may comprise a first heating part 210 that allows an airflow to pass through. In a specific embodiment, this first heating part 210 is independently operated relative to the rest of the electric heater 200, for example being independently turned on and off. It should be noted that, in the sense of the present text, when the electric heater 200 or a portion thereof is turned on, current will flow through this electric heater 200 or a portion thereof; when the electric heater 200 or a portion thereof is turned off, current will no longer flow through this electric heater 200 or a portion thereof. As shown in the figures, the housing 100 may have a partition wall, called a first partition wall 110 herein; this first partition wall 110 is configured to extend from the first heating part toward downstream of the flow of an airflow, so as to partition a first airflow channel 2001 and a second airflow channel 2002 downstream of the first heating part 210. That is, the housing 100 of the air conditioning module 10 is provided with a first airflow channel 2001 and a second airflow channel 2002 in a space downstream of this first heating part 210 of the electric heater 200, and the first airflow channel 2001 and the second airflow channel 2002 are partitioned from each other by the first partition wall 110. In a specific embodiment, a first airflow channel 2001 and a second airflow channel 2002 are each defined by a first partition wall 110 and another corresponding portion of a housing 100. In a specific embodiment, a first airflow channel 2001 and a second airflow channel 2002 can pass into different outlets of a housing 100; in an exemplary embodiment, the first airflow channel 2001 may pass into a right-front face-blowing outlet 1005 and/or right-front feet-blowing outlet 1006 (shown in Fig. 1) from among outlets of the housing 100, and the right-front face-blowing outlet 1005 and/or the right-front feet-blowing outlet 1006 may pass into a right-front zone of a vehicle cabin, i.e. a front passenger zone, and the second airflow channel 2002 may pass into a rear-seat outlet from among outlets of the housing 100, more specifically a right-rear face-blowing/feet-blowing outlet 1009 (shown in Fig. 1 and Figs. 5 - 7) from among rear-seat outlets, and the right-rear face-blowing/feet-blowing outlet 1009, for example, may pass into a right-rear zone of the vehicle cabin, i.e. a rear passenger-side rear-seat zone. It should be noted that, here, the corresponding arrangements of the first airflow channel 2001 and the second airflow channel 2002 and the corresponding outlets of the housing 100 are merely illustrative and not restrictive.

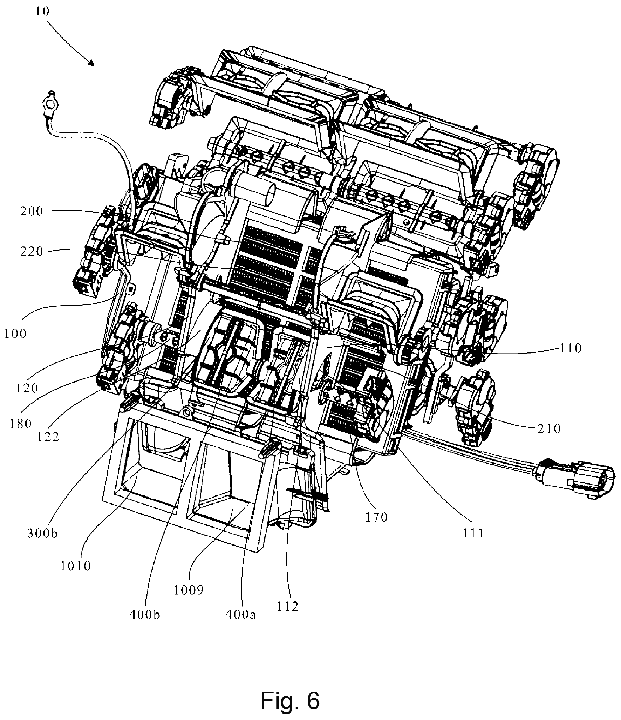

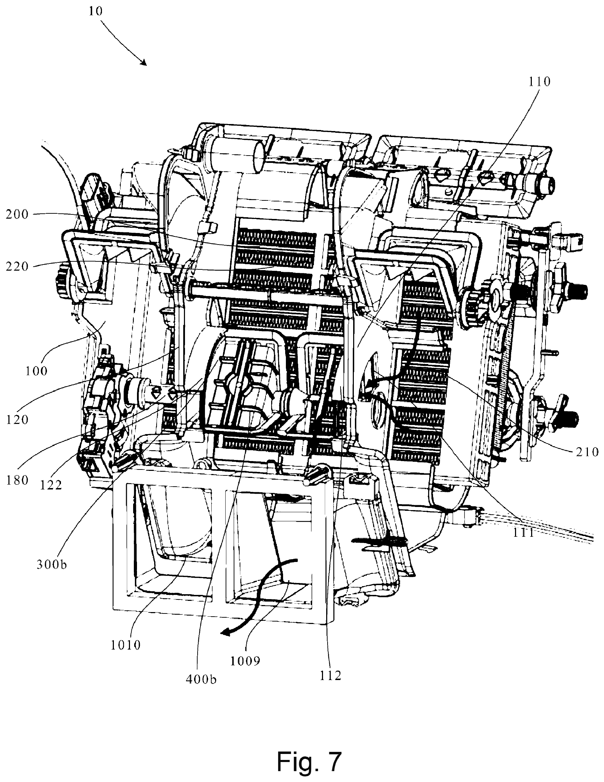

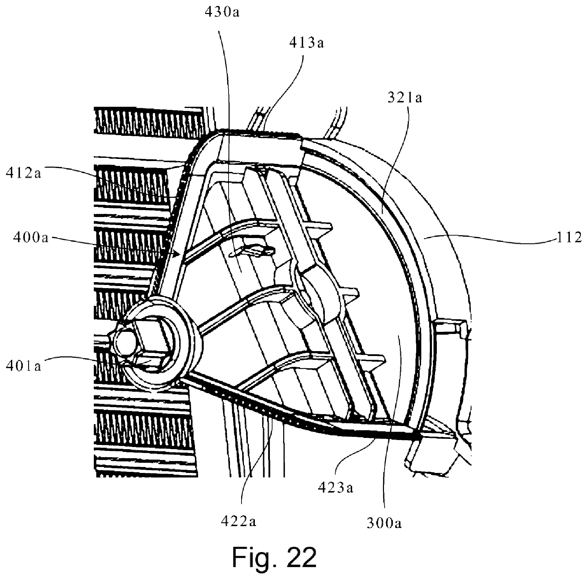

In some embodiments, as shown in Figs. 6 - 12, 15 - 18 and 20, a bypass hole may be arranged in the first partition wall 110, herein called a first bypass hole 111, and correspondingly, the air conditioning module 10 further comprises a first bypass valve 300a that is arranged in the housing 100 and cooperates with the first bypass hole 111. The first bypass hole 111, for example, may be a fan-shaped portion, and also may be cylindrical or rectangular, or may have any other suitable shape. The first bypass valve 300a may at least switch between a first position which closes the first bypass hole 111 (as schematically shown in Figs. 6, 11, 15 - 18 and 22) and a second position which at least partially opens the first bypass hole 111 (as schematically shown in Figs. 7 - 10 and 12). More specifically, when one of the first airflow channel 2001 and the second airflow channel 2002 is closed, i.e. no longer able to pass into the corresponding outlet of the housing 100, the first bypass valve 300a is configured to at least partially open the first bypass valve 111 in the second position, so that the first airflow channel 2001 communicates with the second airflow channel 2002 by means of the first bypass hole 111. Thus, it is still possible to cause an unheated airflow to pass through the whole of the first heating part 210 and enter the first airflow channel 2001 and the second airflow channel 2002 located downstream of the first heating part 210, and since the first bypass hole 111 is in an at least partially open state, at this time the heated airflow downstream of the first heating part 210 may flow via the first bypass hole 111 into an airflow channel, which is able to pass into the corresponding outlet of the housing 100, due to not being closed, i.e. being open, from among the first airflow channel 2001 and the second airflow channel 2002, and flows from there toward the corresponding outlet of the housing 100, which is able to effectively prevent dry burning of any portion of the first heating part 210 in any state.

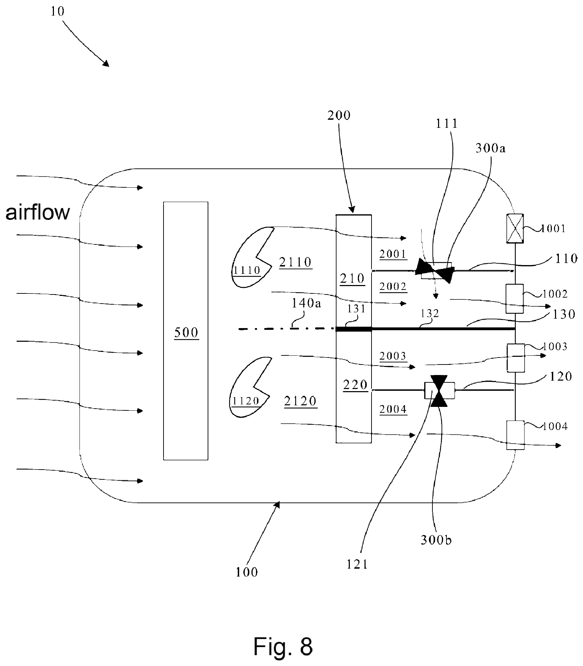

In some embodiments, as schematically shown in Figs. 8 - 12 and 15 - 18, the air conditioning module 10 may further comprise a first channel valve 1001 that is used for the first airflow channel 2001 and is arranged on the housing 100, the first channel valve 1001 being able to open or close the first airflow channel 2001; when the first airflow channel 2001 is opened thereby, the first airflow channel 2001 is able to pass into the corresponding outlet of the housing 100, and when the first airflow channel 2001 is closed thereby, the first airflow channel 2001 is no longer able to pass into the corresponding outlet of the housing 100. Optionally, the air conditioning module 10 may further comprise a second channel valve 1002 that is used for the second airflow channel 2002 and is arranged on the housing 100, the second channel valve 1002 being able to open or close the second airflow channel 2002; when the second airflow channel 2002 is opened thereby, the second airflow channel 2002 is able to pass into the corresponding outlet of the housing 100, and when the second airflow channel 2002 is closed thereby, the second airflow channel 2002 is no longer able to pass into the corresponding outlet of the housing 100.

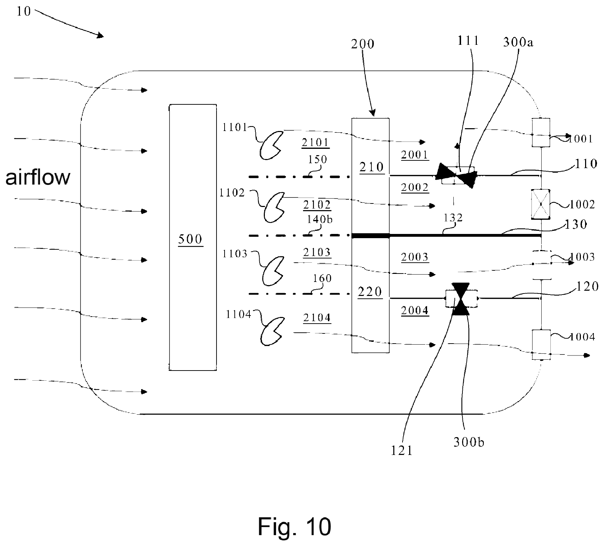

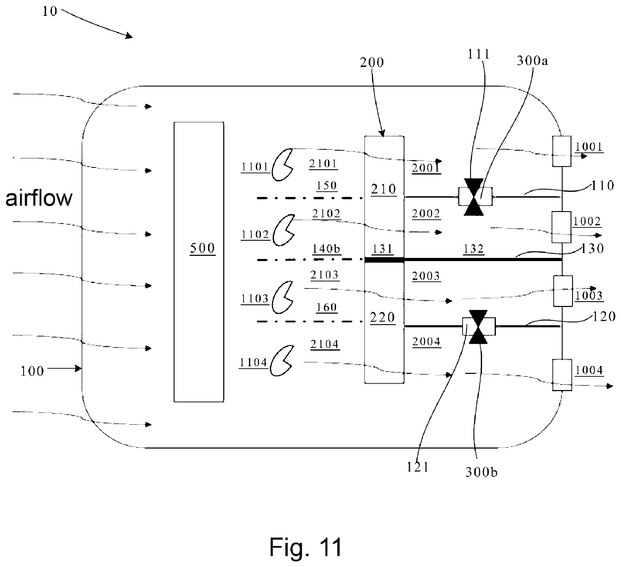

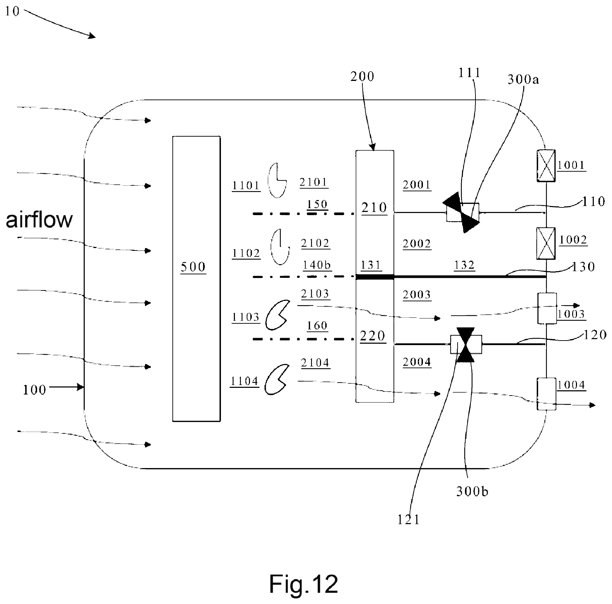

As shown in Figs. 7 - 9, in exemplary embodiments shown therein, the first airflow channel 2001 is closed, more specifically closed by the first channel valve 1001 so as to be no longer able to pass into the corresponding outlet of the housing 100, and the second airflow channel 2002 is open, more specifically opened by the second channel valve 1002 so as to be able to pass into the corresponding outlet of the housing 100, and it is necessary for the first heating part 210 of the electric heater 200 to be in a started i.e. powered-on state; at this time, it is necessary to put the first bypass valve 300a in the second position to at least partially open the first bypass hole 111; it is necessary to cause an airflow from upstream to pass through the whole of the first heating part 210 to arrive in the first airflow channel 2001 and the second airflow channel 2002, but since the first airflow channel 2001 is closed, the airflow is unable to pass into the corresponding outlet of the housing 100 at this time, and therefore a heated airflow in the first airflow channel 2001 cannot be discharged via the corresponding outlet of the housing 100, but flows into the second airflow channel 2002 via the at least partially open first bypass hole 111, to be discharged via the corresponding outlet of the housing 100 that communicates with the second airflow channel 2002 into a designated zone inside the vehicle cabin, such as the right-rear zone. Such a design effectively prevents dry burning of the portion of the first heating part 210 of the electric heater 200 that corresponds to the first airflow channel 2001, thereby ensuring safety. Similarly, as schematically shown in Fig. 10, the second airflow channel 2002 is closed, more specifically closed by the second channel valve 1002 so as to be no longer able to pass into the corresponding outlet of the housing 100, and the first airflow channel 2001 is open, more specifically opened by the first channel valve 1001 so as to be able to pass into the corresponding outlet of the housing 100, and it is necessary for the first heating part 210 to be in a started i.e. powered-on state; at this time, it is necessary to likewise put the first bypass valve 300a in the second position to at least partially open the first bypass hole 111; it is necessary to cause an airflow from upstream to pass through the whole of the first heating part 210 to arrive in the first airflow channel 2001 and the second airflow channel 2002, but since the second airflow channel 2002 is closed, the airflow is unable to pass into the corresponding outlet of the housing 100 at this time, and therefore a heated airflow in the second airflow channel 2002 cannot be discharged via the corresponding outlet of the housing 100, but flows into the first airflow channel 2001 via the at least partially open first bypass hole 111, to be discharged via the corresponding outlet of the housing 100 that communicates with the first airflow channel 2001 into a designated zone inside the vehicle cabin, such as the right-front zone. Thus, the portion of the first heating part 210 of the electric heater 200 that corresponds to the second airflow channel 2002 is effectively prevented from dry burning. In addition, as schematically shown in Fig. 11, the first airflow channel 2001 and the second airflow channel 2002 are both open, the first heating part 210 is started, i.e. powered on, and it is necessary to cause an airflow from upstream to pass through the whole of the first heating part 210; at this time, the first bypass valve 300a may be put in the first position which closes the first bypass hole 111, to allow independent regulation and control of portions of the air conditioning module corresponding to the first airflow channel 2001 and the second airflow channel 2002 and therefore corresponding zones of the vehicle cabin. In addition, as schematically shown in Fig. 12, the first airflow channel 2001 and the second airflow channel 2002 are both closed, the first heating part 210 is turned off, i.e. powered off, and it is no longer necessary to cause an airflow from upstream to pass through the first heating part 210; at this time, the first bypass valve 300a may be in the first position or the second position.

In some embodiments, as shown in Figs. 4 - 19, the electric heater 200 may further comprise a second heating part 220 that allows an airflow to pass through. In a specific embodiment, this second heating part 220 is independently operated relative to the rest of the electric heater 200, and more specifically is operated independently relative to the first heating part 210, for example being independently turned on and off. The housing 100 may have a partition wall, called a second partition wall 120 herein; this second partition wall 120 is configured to extend from the second heating part 220 toward downstream of the flow of an airflow, so as to partition a third airflow channel 2003 and a fourth airflow channel 2004 downstream of the second heating part 220. That is, the housing 100 of the air conditioning module 10 is provided with a third airflow channel 2003 and a fourth airflow channel 2004 in a space downstream of this second heating part 220 of the electric heater 200, and the third airflow channel 2003 and the fourth airflow channel 2004 are partitioned from each other by the second partition wall 220. In a specific embodiment, a third airflow channel 2003 and a fourth airflow channel 2004 are each defined by a second partition wall 120 and another corresponding portion of a housing 100. In a specific embodiment, a third airflow channel 2003 and a fourth airflow channel 2004 can pass into different outlets of a housing 100; in an exemplary embodiment, the third airflow channel 2003 may pass into a rear-seat outlet from among outlets of the housing 100, more specifically a left-rear face-blowing/feet-blowing outlet 1010 from among rear-seat outlets (as shown in Figs. 1 and 5 - 7), and the left-rear face-blowing/feet-blowing outlet 1010, for example, may pass into a left-rear zone of a vehicle cabin, i.e. a rear-seat zone behind the driver, and the fourth airflow channel 2004 may pass into a left-front face-blowing outlet 1007 and/or a left-front feet-blowing outlet 1008 from among outlets of the housing 100 (as shown in Fig. 1), and the left-front face-blowing outlet 1007 and/or the left-front feet-blowing outlet 1008 may pass into a left-front zone of the vehicle cabin, i.e. a driver zone. It should be noted that, here, the corresponding arrangements of the third airflow channel 2003 and the fourth airflow channel 2004 and the corresponding outlets of the housing 100 are merely illustrative and not restrictive.

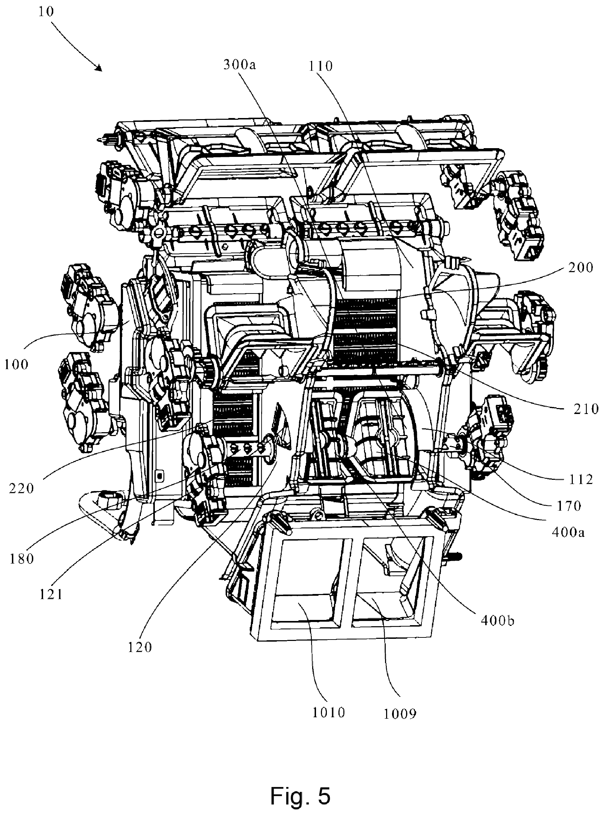

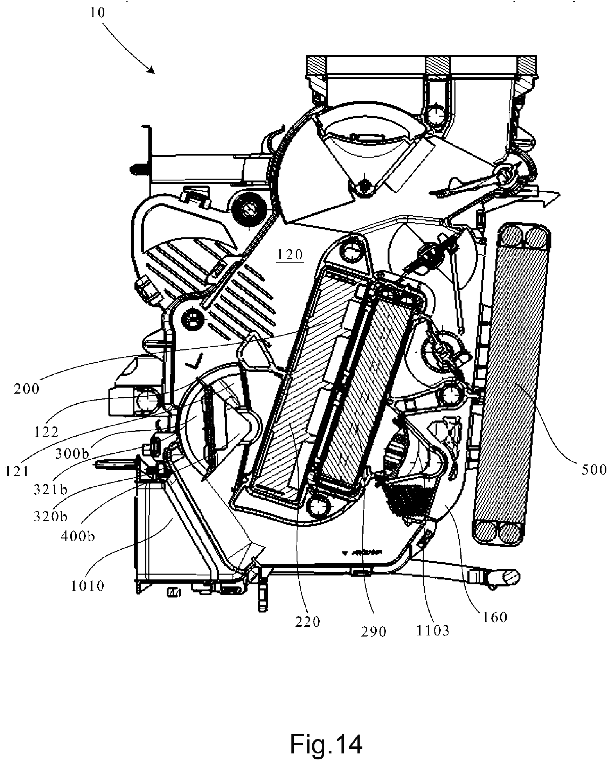

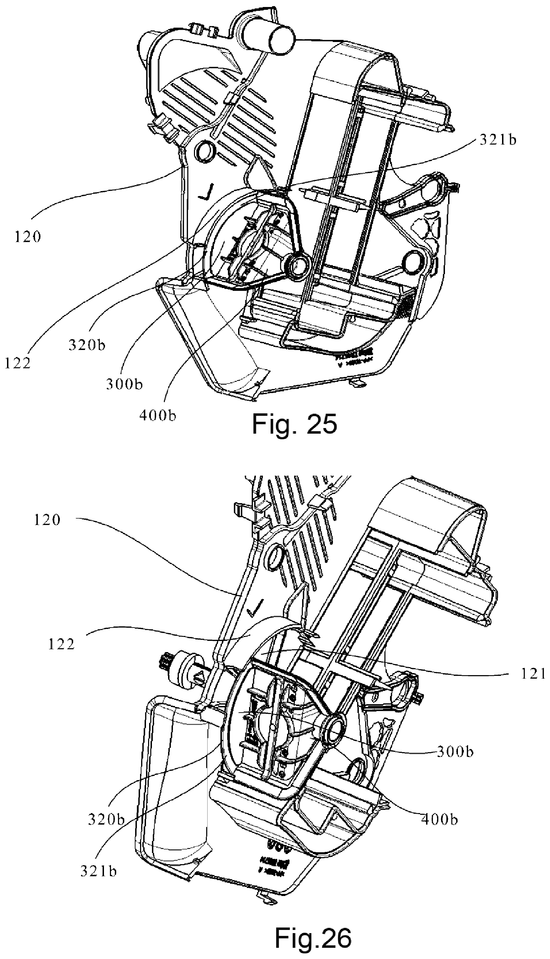

In some embodiments, as shown in Figs. 5, 8 - 12, 14 - 19, 23 and 26, a bypass hole may be arranged in the second partition wall 120, herein called a second bypass hole 121, and correspondingly, the air conditioning module 10 further comprises a second bypass valve 300b that is arranged in the housing 100 and cooperates with the second bypass hole 121. The second bypass hole 121, for example, may be a fan-shaped portion, and also may be cylindrical or rectangular, or may have any other suitable shape. The second bypass valve 300b may at least switch between a first position which closes the second bypass hole 121 (as schematically shown in Figs. 5 - 13, 17 - 18 and 25) and a second position which at least partially opens the second bypass hole 121 (as schematically shown in Figs. 14 - 16 and 26). More specifically, when one of the third airflow channel 2003 and the fourth airflow channel 2004 is closed, i.e. no longer able to pass into the corresponding outlet of the housing 100, the second bypass valve 300b is configured to at least partially open the second bypass valve 121 in the second position, so that the third airflow channel 2003 communicates with the fourth airflow channel 2004 by means of the second bypass hole 121. Thus, it is still possible to cause an unheated airflow to pass through the whole of the second heating part 220 and enter the third airflow channel 2003 and the fourth airflow channel 2004 located downstream of the second heating part 220, and since the second bypass hole 121 is in an at least partially open state, at this time the heated airflow downstream of the second heating part 220 may flow via the second bypass hole 121 into an airflow channel, which is able to pass into the corresponding outlet of the housing 100, due to not being closed, i.e. being open, from among the third airflow channel 2003 and the fourth airflow channel 2004, and flows from there toward the corresponding outlet of the housing 100, which is able to effectively prevent dry burning of any portion of the second heating part 220 in any state.

In some embodiments, as schematically shown in Figs. 8 - 12 and 15 - 18, the air conditioning module 10 may further comprise a third channel valve 1003 that is used for the third airflow channel 2003 and is arranged on the housing 100, the third channel valve 1003 being able to open or close the third airflow channel 2003; when the third airflow channel 2003 is opened thereby, the third airflow channel 2003 is able to pass into the corresponding outlet of the housing 100, and when the third airflow channel 2003 is closed thereby, the third airflow channel 2003 is no longer able to pass into the corresponding outlet of the housing 100. Optionally, the air conditioning module 10 may further comprise a fourth channel valve 1004 that is used for the fourth airflow channel 2004 and is arranged on the housing 100, the fourth channel valve 1004 being able to open or close the fourth airflow channel 2004; when the fourth airflow channel 2004 is opened thereby, the fourth airflow channel 2004 is able to pass into the corresponding outlet of the housing 100, and when the fourth airflow channel 2004 is closed thereby, the fourth airflow channel 2004 is no longer able to pass into the corresponding outlet of the housing 100.

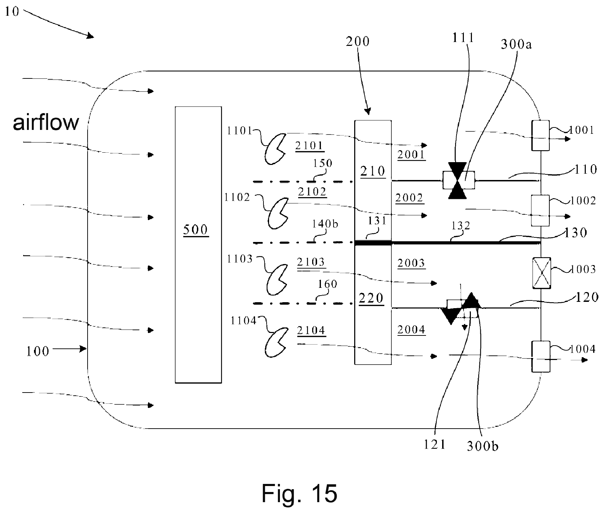

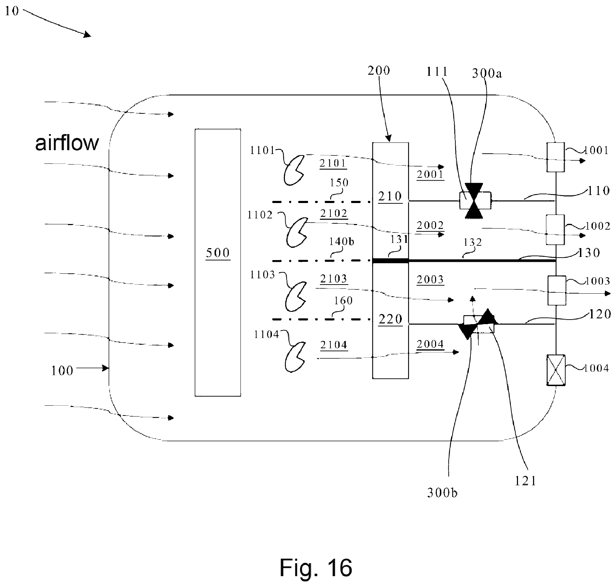

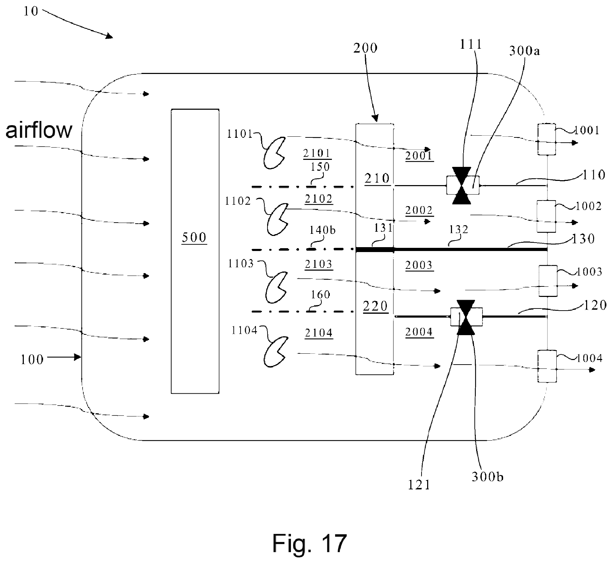

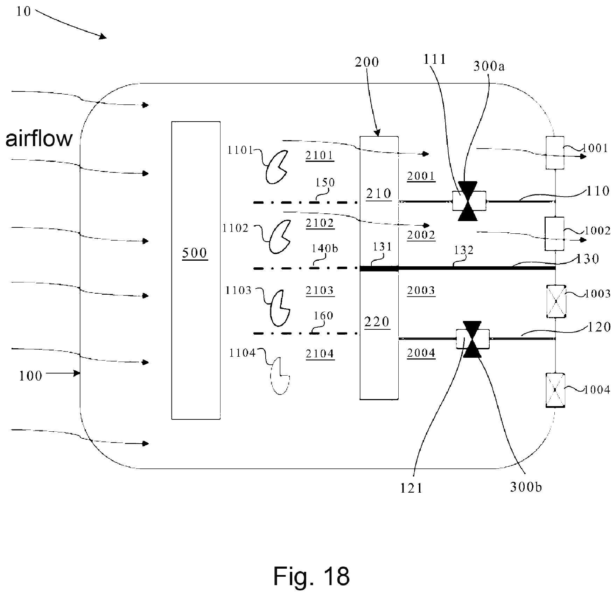

As shown in Fig. 15, in exemplary embodiments shown therein, the third airflow channel 2003 is closed, more specifically closed by the third channel valve 1003 so as to be no longer able to pass into the corresponding outlet of the housing 100, and the fourth airflow channel 2004 is open, more specifically opened by the fourth channel valve 1004 so as to be able to pass into the corresponding outlet of the housing 100, and it is necessary for the second heating part 220 to be in a started i.e. powered-on state; at this time, it is necessary to put the second bypass valve 300b in the second position to at least partially open the second bypass hole 121; it is necessary to cause an airflow from upstream to pass through the whole of the second heating part 220 to arrive in the third airflow channel 2003 and the fourth airflow channel 2004, but since the third airflow channel 2003 is closed, the airflow is unable to pass into the corresponding outlet of the housing 100 at this time, and therefore a heated airflow in the third airflow channel 2003 cannot be discharged via the corresponding outlet of the housing 100, but flows into the fourth airflow channel 2004 via the at least partially open second bypass hole 121, to be discharged via the corresponding outlet of the housing 100 that communicates with the fourth airflow channel 2004 into a designated zone inside the vehicle cabin, such as the left-front zone. Such a design effectively prevents dry burning of the portion of the second heating part 220 of the electric heater 200 that corresponds to the third airflow channel 2003, thereby ensuring safety. Similarly, as schematically shown in Fig. 16, the fourth airflow channel 2004 is closed, more specifically closed by the fourth channel valve 1004 so as to be no longer able to pass into the corresponding outlet of the housing 100, and the third airflow channel 2003 is open, more specifically opened by the third channel valve 1003 so as to be able to pass into the corresponding outlet of the housing 100, the second bypass valve 300b is likewise in a second position to at least partially open the second bypass hole 121, and it is necessary for the second heating part 220 to be in a started i.e. powered-on state; at this time, it is necessary to put the second bypass valve 300b in the second position to at least partially open the second bypass hole 121; it is necessary to cause an airflow from upstream to pass through the whole of the second heating part 220 to arrive in the third airflow channel 2003 and the fourth airflow channel 2004, but since the fourth airflow channel 2004 is closed, the airflow is unable to pass into the corresponding outlet of the housing 100 at this time, and therefore a heated airflow in the fourth airflow channel 2004 cannot be discharged via the corresponding outlet of the housing 100, but flows into the third airflow channel 2003 via the at least partially open second bypass hole 121, to be discharged via the corresponding outlet of the housing 100 that communicates with the third airflow channel 2003 into a designated zone inside the vehicle cabin, such as the right-rear zone. Thus, the portion of the second heating part 220 of the electric heater 200 that corresponds to the fourth airflow channel 2004 is effectively prevented from dry burning. In addition, as schematically shown in Fig. 17, the third airflow channel 2003 and the fourth airflow channel 2004 are both open, the second heating part 220 is started, i.e. powered on, and it is necessary to cause an airflow from upstream to pass through the whole of the second heating part 220; at this time, the second bypass valve 300b may be put in the first position which closes the second bypass hole 121, to allow independent regulation and control of portions of the air conditioning module corresponding to the third airflow channel 2003 and the fourth airflow channel 2004 and therefore corresponding zones of the vehicle cabin. In addition, as schematically shown in Fig. 18, the third airflow channel 2003 and the fourth airflow channel 2004 are both closed, the second heating part 220 is turned off, i.e. powered off, and it is no longer necessary to cause an airflow from upstream to pass through the second heating part 220; at this time, the second bypass valve 300b may be in the first position or the second position.

In some embodiments, as schematically shown in Figs. 8 - 12 and 15 - 18, the housing 100 of the air conditioning module 10 may further have a main partition wall 130; this main partition wall 130 comprises a first partition portion 131 that partitions the first heater 210 and the second heater 220 of the electric heater 200 from each other, thereby allowing the first heater 210 and the second heater 220 to operate independently relative to each other. In addition, this main partition wall 130 further comprises a second partition portion 132 that partitions the second airflow channel 2002 and the third airflow channel 2003 from each other. In an embodiment, the first partition portion 131 and the second partition portion 132 are mutually independent members; alternatively, the first partition portion 131 and the second partition portion 132 are an integral member.

In an embodiment, particularly referring to Fig. 4, the electric heater 200 is formed by a first heating part 210 and a second heating part 220 that operate independently of each other, and the first partition portion 131 of the main partition wall 130 partitions the first heating part 210 and the second heating part 220 from each other. According to a specific embodiment, a first heating part 210 and a second heating part 220 are each half of an electric heater 200. Alternatively, the dimensions and even the shapes of the first heating part 210 and the second heating part 220 may be different. The first partition wall 110 is configured such that a virtual extension part thereof may divide the first heating part 210 into two portions, so that a portion of the first heating part 210 that corresponds to the first airflow channel 2001 and a portion of the first heating part 210 that corresponds to the second airflow channel 2002 have the same dimensions or different dimensions. According to a specific embodiment, the second partition wall 120 is configured such that a virtual extension part thereof may divide the second heating part 220 into two portions, so that a portion of the second heating part 220 that corresponds to the third airflow channel 2003 and a portion of the second heating part 220 that corresponds to the fourth airflow channel 2004 have the same dimensions or different dimensions. Thus, the electric heater 200 only needs to be actually divided by the first partition portion 131 into two portions that operate independently of each other, which simplifies the design and manufacturing process, and also allows the heater to be easily integrated into the air conditioning module 10.

In some embodiments, as schematically shown in Figs. 8 - 19, the air conditioning module 10 may further comprise multiple mixing flaps in the housing 100 that are located upstream of the electric heater 200 in a flow direction of an airflow. For example, a corresponding mixing flap may control airflow types and rates of various airflows that pass into the corresponding portion of the electric heater 200. More specifically, the air conditioning module 10 may further comprise an evaporator 500 that is in the housing 100 and located upstream of the electric heater 200 in a flow direction of an airflow. In this type of situation, the corresponding mixing flap may be configured to control whether or how much of an airflow cooled through the evaporator 500 and whether or how much of an airflow not cooled by the evaporator 200 passes into the corresponding portion of the electric heater 200.

In some embodiments, as shown in Figs. 8 - 12 and 15 - 18, the mixing flaps comprise: a mixing flap corresponding to the first heating part 210 of the electric heater 200, which is called a "first type of mixing flap" for distinction; and a mixing flap corresponding to the second heating part 220 of the electric heating part 200, which is called a "second type of mixing flap" for distinction.

In a first embodiment, as schematically shown in Fig. 8, a space located upstream of the electric heater 200 in the housing 100 may be divided by an upstream main partition wall 140a of the housing 100, for example, into a first overall upstream airflow channel 2110 and a second overall upstream airflow channel 2120 that are partitioned from each other, the upstream main partition wall 140a extending from the electric heater 200 in an upstream direction relative to a flow direction of an airflow; the first type of mixing flap 1110 is a mixing flap that is configured to open or close the first overall upstream airflow channel 2110, and the second type of mixing flap 1120 is a mixing flap that is configured to open or close the second overall upstream airflow channel 2120. When the first heating part 210 operates, i.e. is powered on, the first type of mixing flap 1110 should be in a position which at least partially opens the first overall upstream airflow channel 2110, to ensure that an airflow may flow to the whole of the first heating part 210, to prevent any portion of the first heating part 210 from dry burning; when the first heating part 210 does not operate, i.e. is powered off, the first type of mixing flap 1110 may be in a position which closes the first overall upstream airflow channel 2110. Similarly, when the second heating part 220 operates, i.e. is powered on, the second type of mixing flap 1120 should be in a position which at least partially opens the second overall upstream airflow channel 2120, to ensure that an airflow may flow to the whole of the second heating part 220, to prevent any portion of the second heating part 220 from dry burning; when the second heating part 220 does not operate, i.e. is powered off, the second type of mixing flap 1120 may be in a position which closes the second overall upstream airflow channel 2120. More specifically, an evaporator 500 may be arranged in the housing 100 upstream of the first type of mixing flap 110 and the second type of mixing flap 1120. It should be noted that, in a further specific embodiment, the first overall upstream airflow channel 2110 and the second overall upstream airflow channel 2120 each may comprise multiple upstream airflow sub-channels, and a corresponding mixing flap may be provided in each upstream airflow sub-channel.

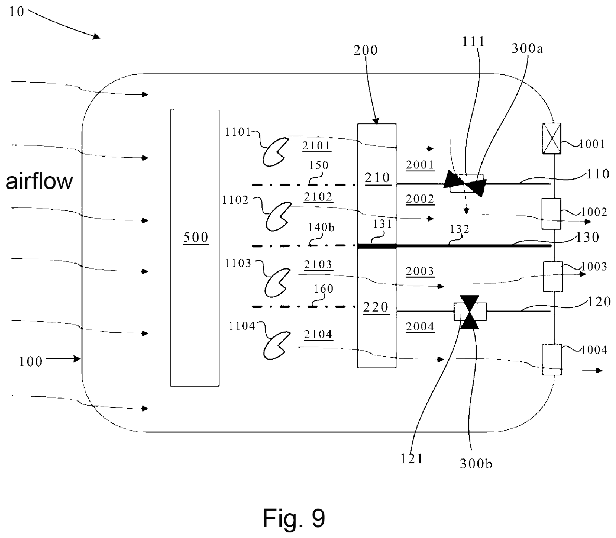

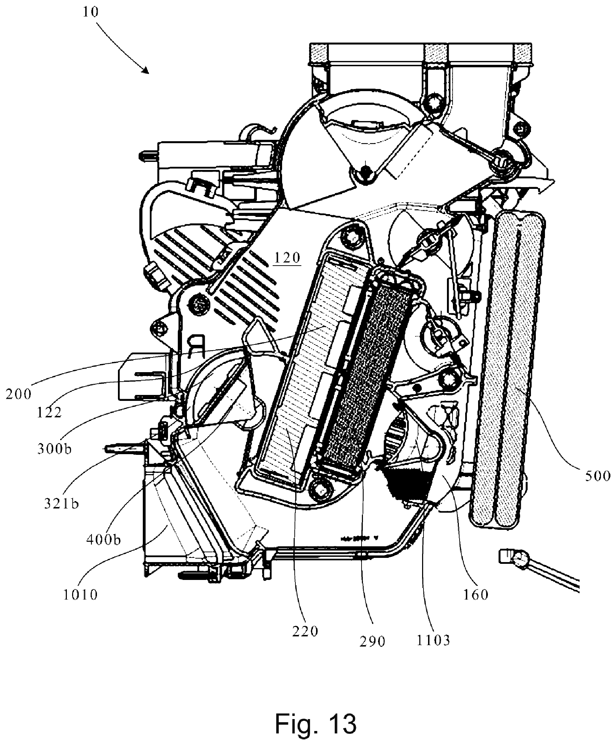

In a second embodiment, as schematically shown in Figs. 9 - 12 and 15 - 18, a space located upstream of an electric heater 200 in a housing 100 may be divided into a first upstream airflow channel 2101, a second upstream airflow channel 2102, a third upstream airflow channel 2103 and a fourth upstream airflow channel 2104 that are partitioned from each other, wherein the first upstream airflow channel 2101 and the second upstream airflow channel 2102 correspond to a first heating part 210 of the electric heater 200, and the third upstream airflow channel 2103 and the fourth upstream airflow channel 2104 correspond to a second heating part 220 of the electric heater 200. More specifically, the first upstream airflow channel 2101 and a first airflow channel 2001 correspond to the same portion of the first heating part 210; the second upstream airflow channel 2102 and a second airflow channel 2002 correspond to the same portion of the first heating part 210; the third upstream airflow channel 2103 and a third airflow channel 2003 correspond to the same portion of the second heating part 220; and the fourth upstream airflow channel 2104 and a fourth airflow channel 2004 correspond to the same portion of the second heating part 220. In a specific embodiment, the housing 100 may comprise a first upstream partition wall 150, a second upstream partition wall 160 and an upstream main partition wall 140b. The first upstream partition wall 150 is configured to extend from the first heating part 210 in an upstream direction relative to a flow direction of an airflow to partition the first upstream airflow channel 2101 and the second upstream airflow channel 2102 from each other; the second upstream partition wall 160 is configured to extend from the first heating part 210 in an upstream direction relative to a flow direction of an airflow to partition the third upstream airflow channel 2103 and the fourth upstream airflow channel 2104 from each other; and the upstream main partition wall 140b is configured to extend from the electric heater 200 in an upstream direction relative to a flow direction of an airflow to partition the second upstream airflow channel 2102 and the third upstream airflow channel 2103 from each other. In this type of situation, the first type of mixing flap may comprise a first mixing flap 1101 that is configured to open or close the first upstream airflow channel 2101 and a second mixing flap 1102 that is configured to open or close the second upstream airflow channel 2102; the second type of mixing flap may comprise a third mixing flap 1103 that is configured to open or close the third upstream airflow channel 2103 (Figs. 13 - 14 and 19) and a fourth mixing flap 1104 that is configured to open or close the fourth upstream airflow channel 2104. In this embodiment, as shown in Figs. 9 - 11 and 15 - 18, when the first heating part 210 operates, i.e. is powered on, the first mixing flap 1101 and the second mixing flap 1102 should be in a position which at least partially opens the first upstream airflow channel 2101 and the second upstream airflow channel 2102, respectively, to ensure that an airflow may flow to the whole of the first heating part 210, to prevent any portion of the first heating part 210 from dry burning; as shown in Fig. 12, when the first heating part 210 does not operate, i.e. is powered off, the first mixing flap 1101 and the second mixing flap 1102 may be in a position which closes the first upstream airflow channel 2101 and the second upstream airflow channel 2102, respectively. Similarly, as shown in Figs. 9 - 12 and 15 - 17, when the second heating part 220 operates, i.e. is powered on, the third mixing flap 1103 and the fourth mixing flap 1104 should be in a position which at least partially opens the third upstream airflow channel 2103 and the fourth upstream airflow channel 2104, respectively, to ensure that an airflow may flow to the whole of the second heating part 220, to prevent any portion of the second heating part 220 from dry burning; as shown in Fig. 18, when the second heating part 220 does not operate, i.e. is powered off, the third mixing flap 1103 and the fourth mixing flap 1104 may be in a position which closes the third upstream airflow channel 2103 and the fourth upstream airflow channel 2104, respectively. More specifically, an evaporator 500 may be arranged in the housing 100 upstream of the first mixing flap 1101, the second mixing flap 1102, the third mixing flap 1103 and the fourth mixing flap 1104.

In some embodiments, as shown in Figs. 5 - 6 and 20 - 22, a first bypass valve 300a is configured as a valve flap that is able to rotate on the housing 100, called a first valve flap. More specifically, the first valve flap may be arranged on a first support shaft 170 supported by the housing 100, and for example, rotates with the first support shaft 170 as the first support shaft 170 is driven to rotate by an electric motor. Thus, the first bypass valve 300a is allowed to easily switch between a first position and a second position. In some embodiments, the first partition wall 110 has a first arcuate protruding piece 112 that protrudes relative to the first partition wall 110 and surrounds at least a portion of the first bypass hole 111, more specifically protruding toward the first bypass valve 300a, and a first radial outer edge 320a of the first flap valve is configured to complement the shape of the first arcuate protruding piece 112, so that at least at a closed position in which the first valve flap closes the first bypass hole 111, the first radial outer edge 320a of the first flap valve abuts the first arcuate protruding piece 112. It should be noted that here "radial outer edge" refers to an edge of the first valve flap located at an outer portion in a radial direction relative to a center of rotation thereof. Thus, it may be ensured that, when the first valve flap is in a position which closes the first bypass hole 111, the first airflow channel 2001 and the second airflow channel 2002 are properly sealed relative to each other, while ensuring that the first valve flap rotationally switches smoothly between the first position and the second position. In a more specific embodiment, a first sealing member 321a may be provided at the first radial outer edge 320a of the first flap valve; this first sealing member 321a is a rubber gasket for example. In this way, sealing of the first airflow channel 2001 and the second airflow channel 2003 relative to each other may be further ensured.

Similarly, in some embodiments, as shown in Figs. 5 - 7, 13 -14 and 23 - 26, a second bypass valve 300b may also be configured as a valve flap that is able to rotate on the housing 100, called a second valve flap. More specifically, the second valve flap may be arranged on a second support shaft 180 supported by the housing 100, and for example, rotates with the second support shaft 180 as the second support shaft 180 is driven to rotate by an electric motor. Thus, the second bypass valve 300b is allowed to easily switch between a first position and a second position. In some embodiments, the second partition wall 120 has a second arcuate protruding piece 122 that protrudes relative to the second partition wall 120 and surrounds at least a portion of the second bypass hole 121, more specifically protruding toward the second bypass valve 300b, and a second radial outer edge 320b of the second flap valve is configured to complement the shape of the second arcuate protruding piece 122, so that at least at a closed position in which the second valve flap closes the second bypass hole 121, i.e. a first position, the second radial outer edge 320b of the second flap valve abuts the second arcuate protruding piece 122. Thus, it may be ensured that, when the second valve flap is in a position which closes the second bypass hole 121, the third airflow channel 2003 and the fourth airflow channel 2004 are properly sealed relative to each other, while ensuring that the second valve flap rotationally switches smoothly between the first position and the second position. In a more specific embodiment, a second sealing member 321b may be provided at the second radial outer edge 320b of the second flap valve; this second sealing member 321b is a rubber gasket for example. In this way, sealing of the third airflow channel 2003 and the fourth airflow channel 2004 relative to each other may be further ensured.

In some embodiments, as shown in Figs. 5 - 6 and 20 - 22, the first bypass valve 300a is configured as a portion of a first defrosting priority valve 400a. This allows the number of constituent components of the air conditioning module 10 to be reduced, which simplifies manufacture and assembly of the components, increases cost effectiveness, and is advantageous for compact construction of the air conditioning module 10. In a specific embodiment, the first defrosting priority valve 400a is arranged so as to be able to rotate, for example being arranged on the first support shaft 170 and able to rotate therewith. More specifically, the first defrosting priority valve 400a may rotate together with the first bypass valve 300a between the first position which closes the first bypass hole 111 and the second position which opens the first bypass hole 111. Furthermore, the first defrosting priority valve 400a may further rotate from the second position away from the first position to a third position, the third position being a defrosting priority position, and may rotate from the third position to the second position. In the defrosting priority position, the first defrosting priority valve 400a closes a rear-seat outlet of the housing 100 of the air conditioning module 10 that passes into a rear-seat zone of a cabin of a vehicle, and more specifically closes a right-rear face-blowing/feet-blowing outlet 1009 from among rear-seat outlets. More specifically, in the defrosting priority position, the first bypass valve 300a fully opens the first bypass hole 111. Thus, it is ensured that a maximum amount of air is able to circulate between the second airflow channel 2002 and the first airflow channel 2001 via the first bypass hole 111, so as to allow, for example, the maximum amount of air to reach a defrosting outlet 1011 of the housing 100 of the air conditioning module 10 (shown in Fig. 1). More specifically, the first bypass valve 300a is configured to at least partially open the first bypass hole 111 when in the second position, for example opening the first bypass hole 111 by an opening degree of 50%.

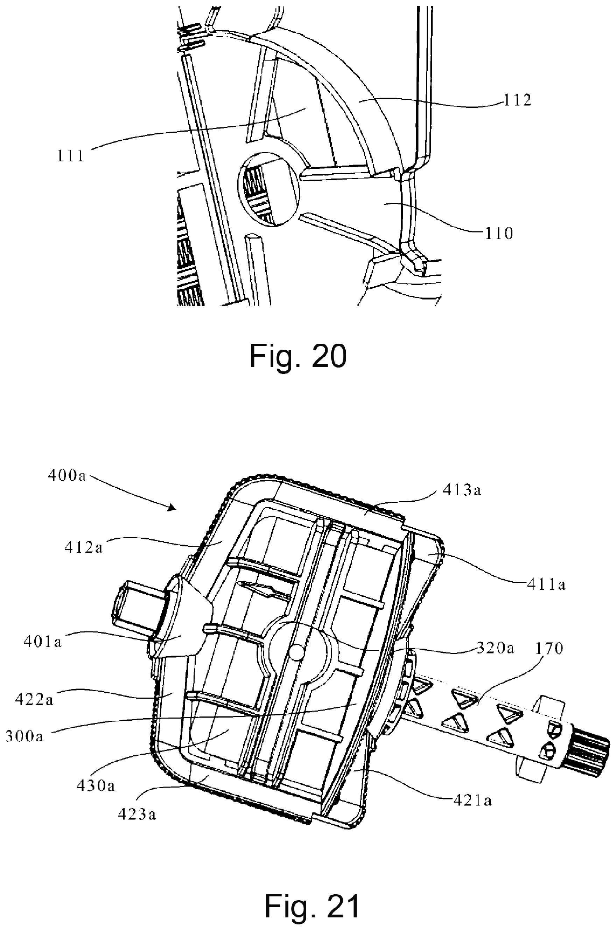

In some embodiments, as shown in Figs. 5 - 6 and 20 - 22, the first defrosting priority valve 400a is a cylindrical valve that is herein called a first cylindrical valve 400a. In some embodiments, the first bypass valve 300a is an axial end face of the first cylindrical valve 400a that is arranged perpendicularly to a rotation axis of the first cylindrical valve 400a. In a specific embodiment, as shown in Figs. 21 - 22, the first cylindrical valve comprises a first rotary shaft 401a, the first rotary shaft 401a, for example, being fitted around a first support shaft 170 that is supported by the housing 100 so as to be able to rotate around the first support shaft 170. The first cylindrical valve 400a further comprises two first frame parts 410a, 420a that protrude radially outward from the first rotary shaft 401a and are spaced apart from each other in a circumferential direction. Each first frame part comprises a first axial end beam 411a, 421a, a second axial end beam 412a, 422a, and a top beam 413a, 423a that is connected between the first axial end beam 411a, 421a and the second axial end beam 412a, 422a. The first bypass valve 300a is configured to join the first axial end beams 411a, 421a of the two first frame parts 410a, 420a to form an axial end face of the first cylindrical valve 400a. The first cylindrical valve 400a further comprises a first extension part 430a that extends between the top beams 413a, 423a of the two first frame parts 410a, 420a and between the second axial end beams 412a, 422a of the two first frame parts 410a, 420a. In a more specific embodiment, in a defrosting priority position, the axial end face of the first cylindrical valve 400a that is formed by the first bypass valve 300a abuts the first partition wall 110, and the second axial end beams 412a, 422a of the two first frames 410a, 420a of the first cylindrical valve 400a abut the main partition wall 130 mentioned above, more specifically one side of the second partition portion 132 of the main partition wall 130, and with the aid of the first extension part 130a, close the corresponding rear-seat outlet of the housing 100, for example the right-rear face-blowing/feet-blowing outlet 1009.

In some embodiments, as shown in Figs. 5 - 7, 13 - 14 and 23 - 26, the second bypass valve 300b is configured as a portion of a second defrosting priority valve 400b. This likewise allows the number of constituent components of the air conditioning module 10 to be reduced, which simplifies manufacture and assembly of the components, increases cost effectiveness, and is further advantageous for compact construction of the air conditioning module 10. In a specific embodiment, the second defrosting priority valve 400b is arranged so as to be able to rotate, for example being arranged on a second support shaft 180 and able to rotate therewith. More specifically, the second defrosting priority valve 400b may rotate together with the second bypass valve 300b between the first position which closes the second bypass hole 121 and the second position which opens the second bypass hole 121. Furthermore, the second defrosting priority valve 400b may further rotate from the second position away from the first position to a third position, the third position being a defrosting priority position, and may rotate from the third position to the second position. In the defrosting priority position, the second defrosting priority valve 400b closes a rear-seat outlet of the housing 100 of the air conditioning module 10 that passes into a rear-seat zone of a cabin of a vehicle, more specifically a left-rear face-blowing/feet-blowing outlet 1010 from among rear-seat outlets. More specifically, in the defrosting priority position, the second bypass valve 300b fully opens the second bypass hole 121. Thus, it is ensured that a maximum amount of air is able to circulate between the third airflow channel 2003 and the fourth airflow channel 2004 via the second bypass hole 121, so as to allow, for example, the maximum amount of air to reach a defrosting outlet 1011 of the housing 100 of the air conditioning module 10 (shown in Fig. 1). More specifically, the second bypass valve 300b is configured to at least partially open the second bypass hole 121 when in the second position, for example opening the second bypass hole 121 by an opening degree of 50%.

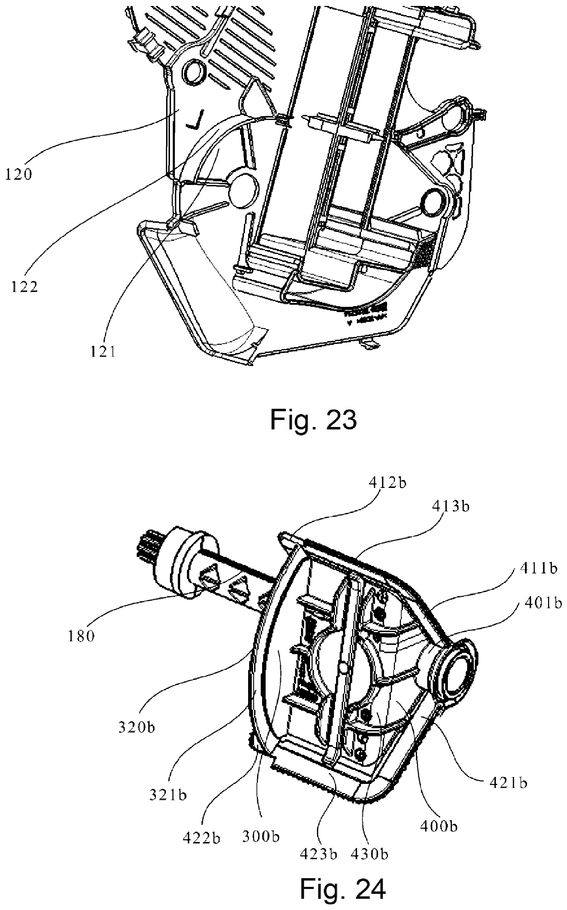

In some embodiments, as shown in Figs. 5 - 7, 13 - 14 and 23 - 26, the second defrosting priority valve 400b is a cylindrical valve that is herein called a second cylindrical valve 400b. In some embodiments, the second bypass valve 300b is an axial end face of the second cylindrical valve 400b that is arranged perpendicularly to a rotation axis of the second cylindrical valve 400b. In a specific embodiment, as shown in Figs. 24 - 26, the second cylindrical valve 400b comprises a second rotary shaft 401b, the second rotary shaft 401b, for example, being fitted around a second support shaft 180 that is supported by the housing 100 so as to be able to rotate around the second support shaft 180. The second cylindrical valve 400b further comprises two second frame parts 410b, 420b that protrude radially outward from the second rotary shaft 401b and are spaced apart from each other in a circumferential direction. Each second frame part 410b, 420b comprises a first axial end beam 411b, 421b, a second axial end beam 412b, 422b, and a top beam 413b, 423b that is connected between the first axial end beam 411b, 421b and the second axial end beam 412b, 422b. The second bypass valve 300b is configured to join the second axial end beams 412b, 422b of the two second frame parts 410b, 420b to form an axial end face of the second cylindrical valve 400b. The second cylindrical valve 400b further comprises a second extension part 430b that extends between the top beams 413b, 423b of the two second frame parts 410b, 420b and between the first axial end beams 411b, 421b of the two second frame parts 410b, 420b. In a more specific embodiment, in a defrosting priority position, the axial end face of the second cylindrical valve 400b that is formed by the second bypass valve 300b abuts the second partition wall 120, and the first axial end beams 411b, 421b of the two second frames 410b, 420b of the second cylindrical valve 400b abut the main partition wall 130 mentioned above, more specifically one side of the second partition portion 132 of the main partition wall 130, and with the aid of the second extension part 430b, close the corresponding rear-seat outlet of the housing 100, for example the left-rear face-blowing/feet-blowing outlet 1010.

In a specific exemplary application scenario, the air conditioning module 10 may be used for a vehicle comprising a cabin that has a left-front zone, a right-front zone, a left-rear zone and a right-rear zone.

In such an exemplary application scenario, as shown in Fig. 2, according to a first embodiment, the air conditioning module 10 may be divided into a first zone Z1a, a second zone Z2a and a third zone Z3a, more specifically a first zone Z1a, a second zone Z2a and a third zone Z3a that are controlled independently of each other, thus forming an air conditioning module of three zones. The first zone Z1a may be set to correspond to a left-front zone of the vehicle cabin, the second zone Z2a to a right-front zone of the vehicle cabin, and the third zone Z3a to both a left-rear zone and a right-rear zone of the vehicle cabin, which forms both the left-rear zone and the right-rear zone jointly into a rear-seat zone. According to an exemplary embodiment, the electric heater 200 of the air conditioning module 10 may comprise the first heating part 210 and the second heating part 220 mentioned above that operate independently of each other. The first heating part 210 may be configured for a right-front zone and a right-rear zone of a vehicle cabin, and the second heating part 220 may be configured for a left-front zone and a left-rear zone of the vehicle cabin.

In such an exemplary application scenario, as shown in Fig. 3, according to a second embodiment, the air conditioning module 10 may be divided into a first zone Z1b, a second zone Z2b, a third zone Z3b and a fourth zone Z4b, these four zones more specifically being controlled independently of each other, thus forming an air conditioning module of four zones. The first zone Z1b may be set to correspond to a left-front zone of the vehicle cabin, the second zone Z2b to a right-front zone of the vehicle cabin, the third zone Z3b to a left-rear zone of the vehicle cabin, and the fourth zone Z4b to a right-rear zone of the vehicle cabin. According to an exemplary embodiment, the electric heater 200 of the air conditioning module 10 may comprise the first heating part 210 and the second heating part 220 mentioned above that operate independently of each other. The first heating part 210 may be configured for a right-front zone and a right-rear zone of a vehicle cabin, and the second heating part 220 may be configured for a left-front zone and a left-rear zone of the vehicle cabin.

Another aspect of the present disclosure relates to a vehicle, which comprises the air conditioning module 10 according to any one of the above embodiments or any combination thereof. More specifically, the vehicle may comprise a cabin that has a left-front zone, a right-front zone, a left-rear zone and a right-rear zone.

Demonstrative embodiments of the air conditioning module proposed in the present utility model have been described in detail above with reference to preferred embodiments. However, those skilled in the art will understand that without departing from the concept of the present utility model, various modifications and alterations may be made to the specific embodiments above, and various technical features and structures proposed in the present utility model may be combined in various ways, without exceeding the scope of protection of the present utility model.

The scope of the present disclosure is not defined by the aforementioned embodiments, but by the appended claims and their equivalent scope.

## Claims

1. An air conditioning module for a vehicle, **characterized in that** the air conditioning module (10) comprises:
a housing (100), which is constructed to allow an airflow to pass through;
an electric heater (200), which is arranged in the housing (100); the electric heater (200) has a first heating part (210) that allows the airflow to pass through,
wherein the housing (100) has a first partition wall (110), and the first partition wall (110) extends from the first heating part (210) toward downstream of the flow of the airflow, so as to partition a first airflow channel (2001) and a second airflow channel (2002) downstream of the first heating part (210),
wherein a first bypass hole (111) is provided in the first partition wall (110), and
wherein the air conditioning module (10) further comprises a first bypass valve (300a) that is arranged on the housing (100);
when one of the first airflow channel (2001) and the second airflow channel (2002) is closed, the first bypass valve (300a) opens the first bypass hole (111), so that the first airflow channel (2001) communicates with the second airflow channel (2002) by means of the first bypass hole (111).

2. The air conditioning module as claimed in claim 1, **characterized in that** the electric heater (200) further has a second heating part (220) that allows the airflow to pass through;
the housing (100) further has a second partition wall (120), and the second partition wall (120) extends from the second heating part (220) toward downstream of the flow of the airflow, so as to partition a third airflow channel (2003) and a fourth airflow channel (2004) downstream of the second heating part (220),
wherein a second bypass hole (121) is provided in the second partition wall (120), and
wherein the air conditioning module (10) further comprises a second bypass valve (300b) that is arranged on the housing (100);
when one of the third airflow channel (2003) and the fourth airflow channel (2004) is closed, the second bypass valve (300b) opens the second bypass hole (121), so that the third airflow channel (2003) communicates with the fourth airflow channel (2004) by means of the second bypass hole (121).

3. The air conditioning module as claimed in claim 2, **characterized in that** the housing (100) further has a main partition wall (130); the main partition wall (130) partitions the first heating part (210) and the second heating part (220); and the main partition wall (130) partitions the second airflow channel (2002) and the third airflow channel (2003).

4. The air conditioning module as claimed in claim 2, **characterized in that**
the first bypass valve (300a) and/or the second bypass valve (300b) is correspondingly configured as a first flap valve and/or a second valve flap that is able to rotate on the housing (100).

5. The air conditioning module as claimed in claim 4, **characterized in that**
the first partition wall (110) has a first arcuate protruding piece (112) that protrudes relative to the first partition wall (110) and surrounds at least a portion of the first bypass hole (111), and a first radial outer edge (320a) of the first flap valve is configured to complement the shape of the first arcuate protruding piece (112), wherein at least at a closed position in which the first valve flap closes the first bypass hole (111), the first radial outer edge (320a) of the first flap valve abuts the first arcuate protruding piece (112); and/or
the second partition wall (120) has a second arcuate protruding piece (122) that protrudes relative to the second partition wall (120) and surrounds at least a portion of the second bypass hole (121), and a second radial outer edge of the second flap valve is configured to complement the shape of the second arcuate protruding piece (122), wherein at least at a closed position in which the second valve flap closes the second bypass hole (121), the second radial outer edge of the second flap valve abuts the second arcuate protruding piece (122).

6. The air conditioning module as claimed in claim 5, **characterized in that**
a first sealing member (321a) is provided at the first radial outer edge (320a) of the first flap valve, and/or a second sealing member (321b) is provided at the second radial outer edge (320b) of the second valve flap.

7. The air conditioning module as claimed in any one of claims 2 to 6, **characterized in that** the first bypass valve (300a) and/or the second bypass valve (300b) is correspondingly configured as a portion of the first defrosting priority valve (400a) and/or the second defrosting priority valve (400b).

8. The air conditioning module as claimed in claim 7, **characterized in that** the first defrosting priority valve (400a) and/or the second defrosting priority valve (400b) is correspondingly a first cylindrical valve and/or a second cylindrical valve.

9. The air conditioning module as claimed in claim 8, **characterized in that** the first bypass valve (300a) and/or the second bypass valve (300b) is correspondingly an axial end face of the first cylindrical valve and/or the second cylindrical valve that is perpendicular to a rotation axis of the first cylindrical valve and/or the second cylindrical valve.

10. The air conditioning module as claimed in any of claims 2 to 6, **characterized in that** the air conditioning module (10) further comprises the following arranged on the housing (100):
a first channel valve (1001), which is configured to open or close the first airflow channel (2001);
a second channel valve (1002), which is configured to open or close the second airflow channel (2002); and/or
a third channel valve (1003), which is configured to open or close the third airflow channel (2003);
a fourth channel valve (1004), which is configured to open or close the fourth airflow channel (2004).

11. The air conditioning module as claimed in any of claims 1 to 6, **characterized in that** the electric heater (200) comprises a positive temperature coefficient heating element.

12. A vehicle, **characterized in that** the vehicle comprises the air conditioning module (10) as claimed in any one of claims 1 to 11.
